# EUROPÄISCHE PATENTSCHRIFT

(11) **EP 3 359 431 B1**
(45) Veröffentlichungstag und Bekanntmachung des Hinweises auf die Patenterteilung: **17.07.2019**
(21) Anmeldenummer: 16805056.5
(22) Anmeldetag: 29.11.2016
(51) Int. Cl.: B60T 8/18, B60T 13/66, B60T 17/22

(54) **DRUCKLUFTBREMSEINRICHTUNG FÜR EIN SCHIENENFAHRZEUG MIT EINER DIREKTEN, ELEKTROPNEUMATISCHEN BREMSE**
COMPRESSED AIR BRAKE DEVICE FOR A RAIL VEHICLE WITH A DIRECT, ELECTROPNEUMATIC BRAKE
DISPOSITIF DE FREIN À AIR COMPRIMÉ POUR UN VÉHICULE FERROVIAIRE COMPRENANT UN FREIN ÉLECTROPNEUMATIQUE DIRECT

(30) Priorität: 04.12.2015 DE 102015224371
(43) Veröffentlichungstag der Anmeldung: 15.08.2018
(73) Patentinhaber: Siemens Mobility GmbH, 81739 München (DE)
(72) Erfinder: REINICKE, Stefan, 85304 Ilmmünster (DE); MAUDER, Mike, 06842 Dessau-Roßlau (DE); WIESAND, Manfred, 90559 Burgthann (DE)
(86) Internationale Anmeldenummer: PCT/EP2016/079084
(87) Internationale Veröffentlichungsnummer: WO 2017/093224

(56) Entgegenhaltungen:
- WO-A1-2004/080775
- WO-A2-2011/086029
- DE-A1-102012 013 521
- DE-T2- 60 200 340

## Beschreibung

Die Erfindung betrifft eine Druckluftbremseinrichtung für ein Schienenfahrzeug mit einer direkten, elektropneumatischen Bremse mit einer Brems-Steuereinheit, die ein Bremssteuergerät mit angeschlossenen Brems-Aktoren und einen mit den Brems-Aktoren verbundenen Brems-Vorsteuerdrucksensor aufweist, und mit einem von den Brems-Aktoren mit einem Brems-Vorsteuerdruck beaufschlagten Druckumsetzer, der mit einem nachgeordneten Bremszylinder verbunden ist.

Eine Druckluftbremseinrichtung dieser Art ist der deutschen Offenlegungsschrift DE 10 2012 013 521 A1 entnehmbar. Bei dieser bekannten Druckluftbremseinrichtung ist eine Brems-Steuereinheit mit einem Bremssteuergerät ausgerüstet, an das Brems-Aktoren in Form eines Bremsmagnetventils und eines Lösemagnetventils angeschlossen sind. Mit den bekannten Brems-Aktoren ist ein Drucksensor verbunden. Nachgeordnet ist den Brems-Aktoren bei der bekannten Druckluftbremseinrichtung ein Druckumsetzer, der mit einem von den Brems-Aktoren eistellbaren Brems-Vorsteuerdruck beaufschlagt ist. An den Druckumsetzer sind Bremszylinder angeschlossen. Das bekannte Verfahren dient zur Detektion von Leckagen in einer bremsdruckführenden Bremsdruckleitung eines Schienenfahrzeugs.

Der Erfindung liegt die Aufgabe zu Grunde, eine Druckluftbremseinrichtung für ein Schienenfahrzeug mit einer direkten, elektropneumatischen Bremse mit einem verbesserten Bremsverhalten und hoher Sicherheit insbesondere bei Schnellbremsungen vorzuschlagen.

Zur Lösung dieser Aufgabe ist bei einer Druckluftbremseinrichtung der eingangs angegebenen Art erfindungsgemäß parallel zur Brems-Steuereinheit eine unabhängige Überwachungs-Steuereinheit angeordnet, die ein Überwachungs-Steuergerät mit angeschlossenen Überwachungs-Aktoren und einen mit den Überwachungs-Aktoren verbundenen Überwachungs-Vorsteuerdrucksensor aufweist; unter Verwendung des Überwachungs-Vorsteuerdrucksensors ist ein Überwachungs-Vorsteuerdruck am Ausgang der Überwachungs-Aktoren regelbar, wobei jeweils der höhere Druck aus dem Brems-Vorsteuerdruck und dem Überwachungs-Vorsteuerdruck oder bei inkorrektem Verhalten der Brems-Steuereinheit der Überwachungs-Vorsteuerdruck auf den Bremszylinder umsetzbar ist; mit dem Druckumsetzer ist ein Drucksensor mit seinem Eingang verbunden, während der Ausgangs des Drucksensors mit dem Überwachungs-Steuergerät in Verbindung steht.

Es ist zwar aus der deutschen Patentschrift DE 195 10 755 C2 eine Bremsanordnung für ein mehrere Bremssysteme aufweisendes schienengebundenes Triebfahrzeug mit einem Notbremsüberwachungssystem bekannt, bei dem mittels einer Bremswirkungserfassungsstufe ein Verzögerungswert in Fahrzeuglängsrichtung erfasst und an eine Bremskraftüberwachungsstufe weiter gegeben wird, wobei Stellbefehle dieser Stufe zur Ansteuerung der Bremssysteme des Fahrzeugs dienen, jedoch wird bei dieser bekannten Bremsanordnung an einer zentralen Stelle des Triebfahrzeugs der Verzögerungswert erfasst, und es werden davon ausgehend im Falle einer Not-/Schnellbremsung dezentrale Bremsaktoren angesteuert. Es ist bei der bekannten Bremsanordnung jedoch nicht feststellbar, welche dezentralen Bremssysteme des Triebfahrzeugs zu wenig Bremskraft erbringen.

Ein wesentlicher Vorteil der erfindungsgemäßen Druckluftbremseinrichtung wird darin gesehen, dass mittels einer unabhängigen und mit einer Brems-Steuereinheit zusammen wirkenden Überwachungs-Steuereinheit jeweils die Feststellung möglich ist, welche dezentralen Bremssysteme in einem Schienenfahrzeug unzeitig zu wenig Bremskraft erbringen und dies weitgehend zu kompensieren. Mittels der erfindungsgemäßen Druckluftbremseinrichtung lässt sich nämlich erreichen, dass Haftwertgrenzen an bestimmten Radsätzen des Schienenfahrzeugs individuell eingehalten werden können, indem mittels des Überwachungs-Steuergeräts geschwindigkeitsabhängige, zulässige Haftwertgrenzen vorgegeben und somit eingehalten werden können. Wesentlich für die Erfindung ist nämlich, dass die Überwachungs-Steuereinheit unabhängig von der Brems-Steuereinheit arbeitet, da die Überwachungs-Steuereinheit beispielsweise auf elektronischem Wege hinterlegte Brems-Kennlinien aufweisen kann. Dabei kann in der Weise vorgegangen werden, dass mittels eines Drucksensors an dem Druckumsetzer der jeweils höhere Druck aus dem Brems-Vorsteuerdruck und dem Überwachungs-Vorsteuerdruck auf den Bremszylinder umsetzbar ist oder dass bei einem inkorrekten Verhalten der Brems-Steuereinheit der Überwachungs-Vorsteuerdruck am Druckumsetzer umgesetzt auf den Bremszylinder einwirkt.

Ein inkorrektes Verhalten der Brems-Steuereinheit kann durch Eigendiagnose erkannt werden; es ist aber auch möglich, mittels des an den Ausgang des Druckumsetzers angeschlossenen Drucksensors anhand einer Diagnoseroutine in der Überwachungs-Steuereinheit - in Kenntnis des Übersetzungsverhältnisses des Druckumsetzers - auf einen Fehler der Brems-Steuereinheit zu schließen. In diesem Fall könnte alternativ zu einer Maximalauswahl auch eine gesteuerte Umschaltung des Druckumsetzers hinsichtlich des Brems-Vorsteuerdrucks auf den Überwachungs-Vorsteuerdruck vorgesehen sein.

Die geregelte Ansteuerung der erfindungsgemäßen Druckluftbremseinrichtung ermöglicht es, eine maximal mögliche Bremskraft zu erzeugen, weil der Einfluss von Stufen bei der Hinterlegung von Brems-Kennlinien im Bremssteuergerät klein ist; ist ein zusätzlich zu der erfindungsgemäßen Druckluftbremseinrichtung vorgesehenes, weiteres Bremssystem vorhanden, dann ist auch die Abhängigkeit von der Bremsleistung dieses Bremssystems klein. Außerdem können bei einer Verwendung von Bremssystemen, die auf die gleichen Radsätze wirken, wie beispielsweise elektrodynamische Bremsen oder hydraulische Retarder, wegen der maximal möglichen Bremskräfte in vollem Umfang unter Ausnutzung der zulässigen Haftwertgrenzen insbesondere auch bei Schnellbremsungen genutzt werden. Verschleißminimierende Bremssysteme müssen nicht mehr geschwindigkeitsabhängig begrenzt werden.

Bei der erfindungsgemäßen Druckluft-Bremseinrichtung kann ein von dem Überwachungs-Bremssteuergerät gebildetes elektrisches Überwachungssignal in unterschiedlicher Weise gebildet werden. Als vorteilhaft wird es angesehen, wenn Brems-Kennlinien in dem Brems-Steuergerät und in dem Überwachungs-Bremssteuergerät hinterlegt sind.

Andererseits ist es auch möglich und gegebenenfalls vorteilhaft, dass in Abhängigkeit der Bremsleistung einer weiteren Bremse (z.B. elektrische Bremse oder Retarder) des Schienenfahrzeugs das Brems-Steuergerät und das Überwachungs-Steuergerät mit einem Signal beaufschlagt sind, mit dem die benötigte pneumatische Bremskraft in Abhängigkeit der Bremskraft/-leistung dieser zusätzlichen Bremse regelbar ist.

In jedem Falle dienen die Brems-Kennlinien bzw. das in Abhängigkeit von der Bremsleistung einer weiteren, elektrischen Bremse des Schienenfahrzeugs gebildete Signal dazu, dem Brems-Steuergerät und dem Überwachungs-Steuergerät eine Vorgabe für das Bremsverhalten zu machen.

Als vorteilhaft hat es sich ferner erwiesen, wenn die Brems-Steuereinheit und die Überwachungs-Steuereinheit, insbesondere das Brems-Steuergerät und das Überwachungs-Steuergerät, diversitär zueinander ausgeführt sind.

Die erfindungsgemäße Druckluftbremseinrichtung kann in unterschiedlicher Weise einsetzbar sein, insbesondere kann sie als Schnellbremse genutzt werden, auch als eine redundante Betriebsbremse ist sieeinsetzbar, weil in beiden Anwendungsfällen der Vorteil einer parallelen Anordnung einer Überwachungs-Steuereinheit zur Brems-Steuereinheit in gleicher Weise gegeben ist.

Als vorteilhaft hat es sich ferner erwiesen, wenn an eine Schnellbremsschleife der Druckluftbremseinrichtung eine Ventilanordnung angeschlossen ist, von der aus der Druckumsetzer mit einem Mindestdruck beaufschlagbar ist, der niedriger als der Brems-Vorsteuerdruck und der Überwachungs-Vorsteuerdruck ist.

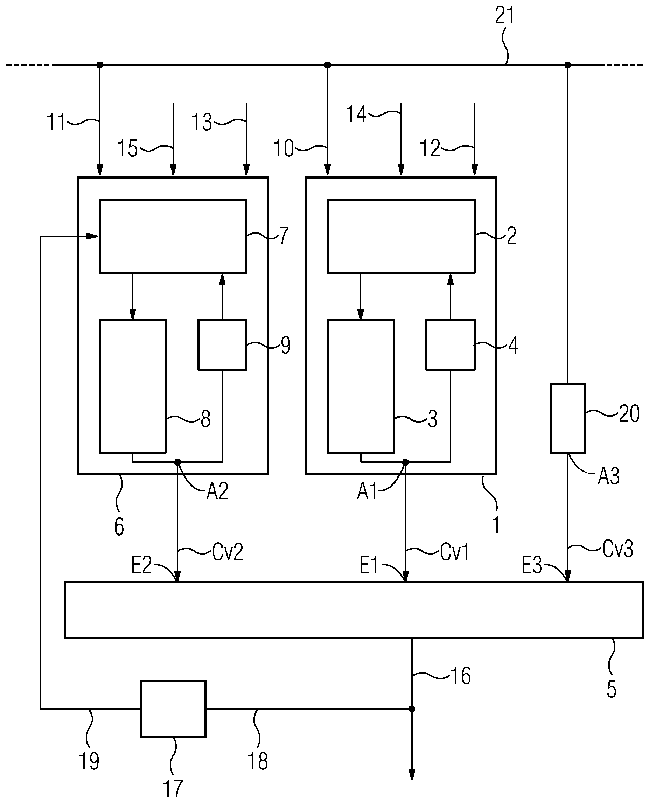

Zur weiteren Erläuterung der Erfindung ist in der Figur ein Ausführungsbeispiel der erfindungsgemäßen Druckluftbremseinrichtung mit Brems-Steuergerät und Überwachungs-Steuergerät dargestellt.

In der Figur ist eine Brems-Steuereinheit 1 für eine Druckluftbremseinrichtung mit einem Brems-Steuergerät 2 gezeigt, wie es an sich bekannt ist und dem eingangs angegebenen Stand der Technik entnehmbar ist. An das Brems-Steuergerät 2 sind Brems-Aktoren 3 angeschlossen, die beispielsweise als Bremsmagnetventil und als Lösemagnetventil ausgebildet sind. Mit den Brems-Aktoren 3 ist eingangsseitig ein Brems-Vorsteuerdrucksensor 4 verbunden, der ausgangsseitig mit dem Brems-Steuergerät 2 verbunden ist.

Die dargestellte Brems-Steuereinheit 1 ist geeignet, an ihrem Ausgang A1 einen Vorsteuerdruck Cv1 zu erzeugen, der im dargestellten Ausführungsbeispiel einen Druckumsetzer 5 mit Maximalauswahl an einem ersten Steuereingang E1 beaufschlagt.

Parallel und unabhängig von der Brems-Steuereinheit 1 ist in dem dargestellten Ausführungsbeispiel eine Überwachungs-Steuereinheit 6 vorhanden, die ein Überwachungs-Steuergerät 7 enthält, an das Überwachungs-Aktoren 8 angeschlossen sind. Mit den Überwachungs-Aktoren 8 ist ein Überwachungs-Vorsteuerdrucksensor 9 verbunden, der ausgangsseitig unter Bildung eines Regelkreises mit dem Überwachungs-Steuergerät 7 in Verbindung steht. Insofern ist die Überwachungs-Steuereinheit 6 ganz ähnlich dem Aufbau des Brems-Steuergeräts 1 aufgebaut. Ausgangsseitig wird am Ausgang A2 durch die Überwachungs-Steuereinheit 6 ein Überwachungs-Vorsteuerdruck Cv2 gebildet, der den Druckumsetzer 5 mit Maximalauswahl an einem zweiten Steuereingang E2 beaufschlagt.

Sowohl die Brems-Steuereinheit 1 als auch die Überwachungs-Steuereinheit 6 können auf ggf. übereinstimmenden Signalwegen 10 und 11 zum Erfassen einer Bremsanforderung beaufschlagt sein. Als Signalwege kommt dabei eine Leittechnik im Schienenfahrzeug, eine Absenkung des Druckes in einer Hauptluftleitung des Schienenfahrzeugs auf ein Schnellbremsniveau, eine Sicherheitsschleife im Schienenfahrzeug oder eine Steuerleitung in Frage.

Ferner ist über einen Signalweg 12 bzw. 13 ein Signal eingegeben, das ein Maß für die derzeitige Geschwindigkeit des Schienenfahrzeugs ist. Bedeutung hat die Geschwindigkeit deshalb, um geschwindigkeitsabhängige, jeweils maximal zulässige Haftwertgrenzwerte nicht zu überschreiten und/oder die geschwindigkeitsabhängigen Leistungseinträge in die Bremsmechanik zu begrenzen. Es ist auch möglich, Geschwindigkeitssensoren im Signalweg 12 bzw. 13 anzuordnen, mittels denen die Geschwindigkeit des Schienenfahrzeugs bestimmt wird.

Ferner weisen sowohl die Brems-Steuereinheit 1 als auch die Überwachungs-Steuereinheit 6 jeweils einen Signaleingang 14 bzw. 15 auf, über den Brems-Kennlinien übergeben werden, bzw. in Abhängigkeit der Bremsleistung eines weiteren Bremssystems, wie zum Beispiel einer elektrodynamischen Bremse, die benötigte pneumatische Bremskraft geregelt wird. Alternativ können die Bremskennlinien auch direkt in den Steuereinheiten hinterlegt sein und/oder können beispielsweise über die Signaleingänge 14 und 15 die aktuellen Istwerte der Leistung einer elektrodynamischen Bremse übertragen werden. Die Kennlinien können geschwindigkeitsabhängig sein.

Eine Ausgangsleitung 16 am Druckumsetzer 5 führt zu einem nicht dargestellten Bremszylinder. Angeschlossen an die Ausgangsleitung 16 ist ein Drucksensor 17 mit seinem Eingang 18; mit seinem Ausgang 19 ist der Drucksensor mit dem Überwachungs-Steuergerät 7 verbunden. Mit dieser Verbindung kann überwacht werden, dass der korrekte und jeweils höhere Druck aus dem Brems-Vorsteuerdruck Cv1 und dem Überwachungs-Vorsteuerdruck Cv2 auf den Bremszylinder geschaltet ist; es wird also bei dieser Ausführungsform der erfindungsgemäßen Druckluftbremseinrichtung der höhere der beiden Drücke auf den Bremszylinder gegeben.

Es ist aber auch möglich, bei einem inkorrekten Verhalten der Brems-Steuereinheit 1 den Überwachungs-Vorsteuerdruck umgesetzt auf den Bremszylinder zu schalten.

Die dargestellte Druckluftbremseinrichtung ist ferner mit einer Ventilanordnung 20 ausgerüstet, die einerseits mit einer nur teilweise gezeigten Schnellbremsschleife 21 und andererseits mit dem Druckumsetzer 5 verbunden ist. Die Ventilanordnung 20, deren Ausgang A3 mit einem dritten Steuereingang E3 des Druckumsetzers 5 verbunden ist, stellt am Druckumsetzer 5 einen Mindestdruck Cv3 zur Verfügung, der niedriger als der Brems-Vorsteuerdruck Cv1 und der Überwachungs-Vorsteuerdruck Cv2 ist; der Mindestdruck Cv3 ist unabhängig von den genannten Vorsteuerdrücken einstellbar. Dabei ist der Mindestdruck Cv3 zur Erzeugung einer Notbremskraft so gewählt, dass beim Vorliegen eines Fehlers sowohl in der Brems-Steuereinheit 1 als auch in der Überwachungs-Steuereinheit 6 aufgrund der Maximalauswahl des Druckumsetzers 5 der Mindestdruck Cv3 auf den Bremszylinder umgesetzt wird.

## Patentansprüche

1. Druckluftbremseinrichtung für ein Schienenfahrzeug mit einer direkten, elektropneumatischen Bremse mit einer Brems-Steuereinheit (1), die ein Brems-Steuergerät (2) mit angeschlossenen Brems-Aktoren (3) und einen mit den Brems-Aktoren (3) verbundenen Brems-Vorsteuerdrucksensor (4) aufweist, und mit einem von den Brems-Aktoren (3) mit einem Brems-Vorsteuerdruck (Cv1) beaufschlagten Druckumsetzer (5), der mit mindestens einem nachgeordneten Bremszylinder verbunden ist,
**dadurch gekennzeichnet, dass**
parallel zur Brems-Steuereinheit (1) eine unabhängige Überwachungs-Steuereinheit (6) angeordnet ist, die ein Überwachungs-Steuergerät (7) mit angeschlossenen Überwachungs-Aktoren (8) und einen mit den Überwachungs-Aktoren (8) verbundenen Überwachungs-Vorsteuerdrucksensor (9) aufweist, unter Verwendung des Überwachungs-Vorsteuerdrucksensors (9) ein Überwachungs-Vorsteuerdruck (Cv2) am Ausgang der Überwachungs-Aktoren (8) regelbar ist, wobei jeweils der höhere Druck aus dem Brems-Vorsteuerdruck (Cv1) und dem Überwachungs-Vorsteuerdruck (Cv2) oder bei einem Fehler der Brems-Steuereinheit (1) der Überwachungs-Vorsteuerdruck (Cv2) auf den Bremszylinder umsetzbar ist, und
mit dem Druckumsetzer (5) eingangsseitig ein Drucksensor (17) verbunden ist, der ausgangsseitig mit dem Überwachungs-Steuergerät (7) in Verbindung steht.

2. Druckluftbremseinrichtung nach Anspruch 1,
**dadurch gekennzeichnet, dass**
Brems-Kennlinien in dem Brems-Steuergerät (2) und in dem Überwachungs-Bremssteuergerät (7) hinterlegt sind.

3. Druckluftbremseinrichtung nach Anspruch 1,
**dadurch gekennzeichnet, dass**
in Abhängigkeit der Bremsleistung einer weiteren, elektrischen Bremse des Schienenfahrzeugs das Brems-Steuergerät (2) und das Überwachungs-Steuergerät (7) mit einem Signal beaufschlagt sind, mit dem die benötigte pneumatische Bremskraft regelbar ist.

4. Druckluftbremseinrichtung nach einem der vorangehenden Ansprüche,
**dadurch gekennzeichnet, dass**
die Brems-Steuereinheit (2) und die Überwachungs-Steuereinheit (6), insbesondere das Brems-Steuergerät (2) und das Überwachungs-Steuergerät (7), diversitär zueinander ausgeführt sind.

5. Druckluftbremseinrichtung nach einem der vorangehenden Ansprüche,
**dadurch gekennzeichnet, dass**
die Bremse als Schnellbremse einsetzbar ist.

6. Druckluftbremseinrichtung nach einem der vorangehenden Ansprüche,
**dadurch gekennzeichnet, dass**
die Bremse für eine Betriebsbremse einsetzbar ist.

7. Druckluftbremseinrichtung nach einem der vorangehenden Ansprüche, **dadurch gekennzeichnet, dass**
an eine Schnellbremsschleife der Druckluftbremseinrichtung eine Ventilanordnung angeschlossen ist, von der aus der Druckumsetzer (5) mit einem Mindestdruck (Cv3) beaufschlagbar ist, der niedriger als der Brems-Vorsteuerdruck (Cv1) und der Überwachungs-Vorsteuerdruck (Cv2) ist.

## Claims

1. Compressed air brake device for a rail vehicle with a direct electropneumatic brake with a brake control unit (1) which has a brake control device (2) with connected brake actuators (3) and a brake pilot control pressure sensor (4) which is connected to the brake actuators (3), and with a pressure converter (5) which is loaded with a brake pilot control pressure (Cv1) by the brake actuators (3) and is connected to at least one downstream brake cylinder,
**characterised in that**
an independent monitoring control unit (6) is arranged in parallel with the brake control unit (1), having a monitoring control device (7) with connected monitoring actuators (8) and a monitoring pilot control pressure sensor (9) which is connected to the monitoring actuators (8), a monitoring pilot control pressure (Cv2) at the output of the monitoring actuators (8) can be regulated using the monitoring pilot control pressure sensor (9), wherein in each case the higher pressure from the brake pilot control pressure (Cv1) and the monitoring pilot control pressure (Cv2), or the monitoring pilot control pressure (Cv2) if a fault is present in the brake control unit, can be relayed to the brake cylinder, and the pressure converter (5) is connected to the input of a pressure sensor (17), whose output is connected to the monitoring control device (7).

2. Compressed air brake device according to claim 1,
**characterised in that**
brake characteristics are stored in the brake control device (2) and in the monitoring brake control device (7).

3. Compressed air brake device according to claim 1,
**characterised in that**
the brake control device (2) and the monitoring control device (7) are loaded with a signal as a function of the braking power of a further electrical brake of the rail vehicle, by means of which signal the required pneumatic braking force can be regulated.

4. Compressed air brake device according to one of the preceding claims,
**characterised in that**
the brake control unit (2) and the monitoring control unit (6), in particular the brake control device (2) and the monitoring control device (7), are embodied in a diversely redundant manner.

5. Compressed air brake device according to one of the preceding claims,
**characterised in that**
the brake can be utilised as a quick-action brake.

6. Compressed air brake device according to one of the preceding claims,
**characterised in that**
the brake can be utilised as a service brake.

7. Compressed air brake device according to one of the preceding claims,
**characterised in that**
a valve arrangement is connected to a quick-action braking loop of the compressed air brake device, from which valve arrangement the pressure converter (5) can be loaded with a minimum pressure (Cv3), which is lower than the brake pilot control pressure (Cv1) and the monitoring pilot control pressure (Cv2).

## Revendications

1. Dispositif de frein à air comprimé d'un véhicule ferroviaire, comprenant un frein électropneumatique direct, ayant une unité (1) de commande de frein, qui a un appareil (2) de commande de frein à actionneurs (3) de frein raccordés et un capteur (4) de pression pilote de frein relié aux actionneurs (3) de frein, et comprenant un convertisseur (5) de pression soumis par les actionneurs (3) de frein à une pression (Cv1) pilote de frein et relié à au moins un cylindre de frein en aval,
**caractérisé en ce que**
en parallèle à l'unité (1) de commande de frein est montée une unité (6) de commande de contrôle indépendante, qui a un appareil (7) de commande de contrôle à actionneurs (8) de contrôle raccordés et un capteur (9) de pression pilote de contrôle, relié aux actionneurs (8) de contrôle, en utilisant le capteur (9) de pression pilote de contrôle, une pression (Cv2) pilote de contrôle est réglable à la sortie des actionneurs (8) de contrôle, dans lequel, respectivement, la pression la plus haute entre la pression (Cv1) pilote de frein et la pression (Cv2) pilote de contrôle ou, si l'unité (1) de commande de frein est en panne, la pression (Cv2) pilote de contrôle peut être appliquée au cylindre de frein et
au convertisseur (5) de pression est relié, du côté de l'entrée, un capteur (17) de pression, qui, du côté de la sortie, est en liaison avec l'appareil (7) de commande de contrôle.

2. Dispositif de frein à air comprimé suivant la revendication 1,
**caractérisé en ce que**
des caractéristiques de frein sont mises en mémoire dans l'appareil (2) de commande de frein et dans l'appareil (7) de commande de frein de contrôle.

3. Dispositif de frein à air comprimé suivant la revendication 1,
**caractérisé en ce que**,
en fonction de la puissance de freinage d'un autre frein électrique du véhicule ferroviaire, l'appareil (2) de commande de frein et l'appareil (7) de commande de contrôle reçoivent un signal, par lequel la force de frein pneumatique nécessaire est réglable.

4. Dispositif de frein à air comprimé suivant l'une des revendications précédentes,
**caractérisé en ce que**
l'unité (2) de commande de frein et l'unité (6) de commande de contrôle, notamment l'unité (2) de commande de frein et d'appareil (7) de commande de contrôle, sont réalisées diversement l'une de l'autre.

5. Dispositif de frein à air comprimé suivant l'une des revendications précédentes,
**caractérisé en ce que**
le frein peut être utilisé comme frein rapide.

6. Dispositif de frein à air comprimé suivant l'une des revendications précédentes,
**caractérisé en ce que**
le frein peut être utilisé comme frein de service.

7. Dispositif de frein à air comprimé suivant l'une des revendications précédentes,
**caractérisé en ce qu'**
à une boucle de frein rapide du dispositif de frein à air comprimé est raccordé un système de soupape, à partir duquel le convertisseur (5) de pression peut être soumis à une pression (Cv3) minimum, plus basse que la pression (Cv1) pilote de frein et que la pression (Cv2) pilote de contrôle.
